# FASCICULE DE BREVET EUROPEEN

(11) **EP 4 526 142 B1**
(45) Date de publication et mention de la délivrance du brevet: **29.04.2026**
(21) Numéro de dépôt: 23714241.9
(22) Date de dépôt: 16.03.2023
(51) Int. Cl.: B60K 1/04

(54) **BATTERIE DE TRACTION COMPORTANT UNE PIÈCE D'IMPACTEUR DÉMONTABLE POUR COUPER UNE COLLE D'ASSEMBLAGE, PROCÉDÉ ET VÉHICULE SUR LA BASE D'UNE TELLE BATTERIE**
TRAKTIONSBATTERIE MIT ABNEHMBAREM IMPAKTORTEIL ZUM SCHNEIDEN EINES MONTAGEKLEBSTOFFS, VERFAHREN UND FAHRZEUG AUF BASIS SOLCH EINER BATTERIE
TRACTION BATTERY COMPRISING A DISMOUNTABLE IMPACTOR PART FOR CUTTING AN ASSEMBLY ADHESIVE, METHOD AND VEHICLE BASED ON SUCH A BATTERY

(30) Priorité: 20.05.2022 FR 2204856
(43) Date de publication de la demande: 26.03.2025
(73) Titulaire: Stellantis Auto SAS, 78300 Poissy (FR)
(72) Inventeur: BORNIER, Paul, 70400 LUZE (FR); MERESSE, Ludovic, 25750 Arcey (FR)
(74) Mandataire: PSIP
(86) Numéro de dépôt international: PCT/FR2023/050364
(87) Numéro de publication internationale: WO 2023/222957

(56) Documents cités:
- WO-A1-2016/012663
- WO-A1-2020/114713
- DE-A1- 102019 206 893

## Description

L'invention se rapporte au domaine de la sécurité passive des batteries de traction de véhicules automobiles, en particulier vis-à-vis de chocs latéraux (également appelés « chocs de poteaux »).

Les véhicules électriques sont soumis à plusieurs obligations en termes de résistance aux accidents, dont l'obligation de ne pas détériorer les éléments actifs de la batterie de traction en cas de choc latéral à 30 km/h sur toute la longueur du véhicule.

Le plus souvent c'est la structure du véhicule qui protège la batterie de traction mais dans certains cas c'est la batterie elle-même qui est impactée. Elle doit donc comporter des éléments de protection internes.

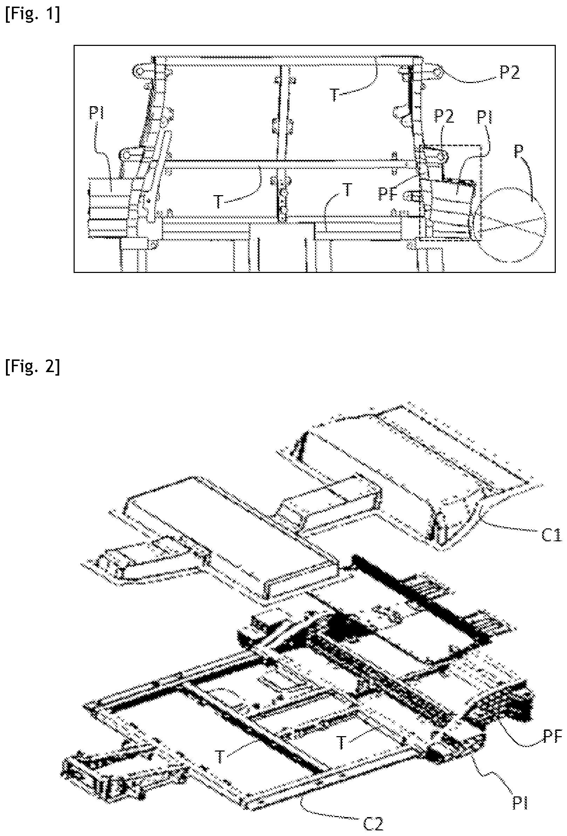

Pour cela, on utilise une batterie incluant des traverses structurantes T à l'intérieur de la batterie et parfois un impacteur PI est nécessaire pour localiser et transmettre les efforts du choc sur la structure. Cet agencement peut être illustré par la figure 1 où la référence P concerne un poteau. Par « impacteur » est entendu un élément absorbeur de chocs, en particulier par déformation permanente.

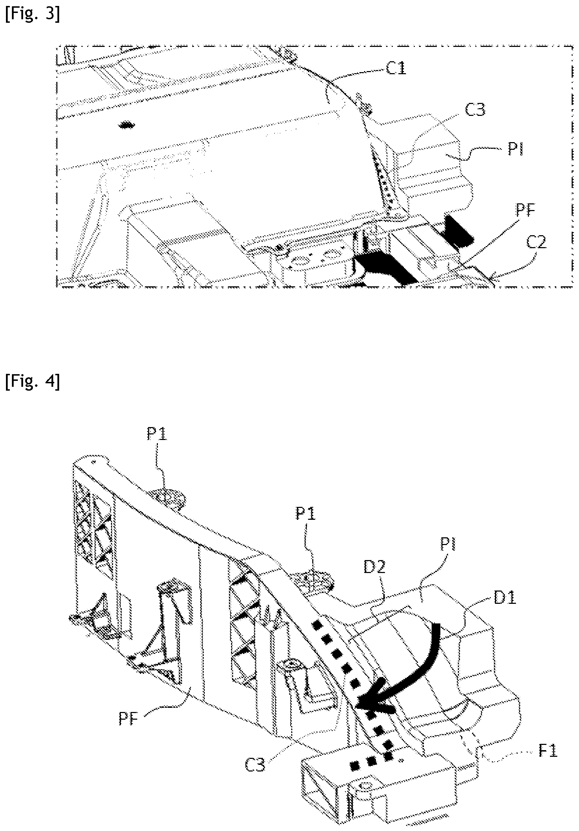

D'autre part, une batterie est composée de deux couvercles assemblés par de la colle. Il s'agit généralement d'un couvercle supérieur et d'un couvercle inférieur C2, pouvant être illustrés par la figure 2. Le couvercle inférieur C2 comporte des éléments de structure de batterie dont un impacteur PI disposé latéralement de chaque côté de la batterie. Lors de l'assemblage, l'impacteur PI est disposé de sorte à masquer une ligne de collage (cordon de colle C3) du couvercle de batterie comme l'illustre la figure 3.

Pour assurer la réparation des éléments internes de la batterie, il est nécessaire de pouvoir séparer les couvercles C1, C2, et donc découper la colle d'assemblage (cordon de colle C3).

Lors de cette découpe, l'impacteur PI peut gêner l'outils de découpe rendant impossible le démontage.

Ainsi, pour laisser de la place à l'outil de découpe (accès D1 de la figure 4) de la colle d'assemblage (cordon de colle C3), l'impacteur PI est découpé suivant la section D2 de la figure 4, dans l'art antérieur.

Malheureusement, l'impacteur PI ainsi découpé est largement fragilisé (notamment à la section F1 de la figure 4), et ne permet plus de transmettre aussi bien les efforts dans les traverses T de la batterie. Il y a donc un risque d'endommagement des éléments actifs de la batterie.

En outre l'état de la technique est connu du document DE102019206893A1.

Un objectif de l'invention est de palier les défauts de l'art antérieur, et notamment de proposer une batterie aisément démontable et remontable sans fragiliser la structure de l'impacteur.

Pour atteindre cet objectif, l'invention propose une batterie de traction de véhicule automobile comprenant un couvercle en deux parties configurées pour être collées ensemble au moyen d'au moins un cordon de colle, la batterie comprenant
- une pièce de flanc pour un flanc de batterie, configurée pour fixer la batterie à une caisse de véhicule, et
- une pièce d'impacteur configurée pour protéger la batterie de chocs latéraux, la pièce d'impacteur étant configurée pour être fixée à la pièce de flanc pour former un flanc de batterie de sorte que la pièce d'impacteur masque au moins partiellement ledit cordon de colle,
la pièce d'impacteur et la pièce de flanc sont des pièces séparées, et sont fixées l'une à l'autre de manière démontable

Ainsi, l'invention proposée consiste à séparer l'impacteur du flanc de la batterie.

Après assemblage du flanc et de l'impacteur, l'ensemble flanc-impacteur a la même fonction que lorsqu'il n'est composé que d'une seule pièce.

L'impacteur démontable peut ainsi garder son inertie complète et remplir son rôle de transmission des efforts vers les traverses internes de la batterie.

L'impacteur peut être démonté en atelier de maintenance pour la découpe de la colle d'assemblage des couvercles de batterie.

Selon une variante, la pièce d'impacteur et la pièce de flanc sont fixées ensemble par vissage. Cela permet de faciliter le démontage de ces pièces l'une de l'autre.

Selon une variante, la pièce de flanc est configurée pour être fixée au véhicule automobile par vissage. Cela permet de faciliter le démontage de la pièce de flanc, et donc de la batterie hors de la caisse.

L'invention porte en outre sur un procédé de démontage d'une batterie de traction de véhicule automobile selon l'invention, ledit cordon de colle étant découplable, le procédé étant caractérisé par les étapes suivantes :
- une étape de désassemblage de la pièce d'impacteur de la pièce de flanc de sorte à démasquer ledit cordon de colle, et
- une étape de découpage dudit cordon de colle.

Selon une variante, l'étape de désassemblage est mise en œuvre par dévissage.

L'invention a également trait à un véhicule automobile comprenant une batterie selon l'invention.

L'invention sera davantage détaillée par la description de modes de réalisation non limitatifs, et sur la base des figures annexées illustrant des variantes de l'invention, dans lesquelles :
- [Fig.1] illustre schématiquement une vue de dessus d'une structure de batterie de l'art antérieur avec un poteau de choc latéral ;
- [Fig.2] illustre schématiquement une vue dans l'espace de couvercle supérieur et d'un couvercle inférieur désassemblés, où le couvercle inférieur comprend la structure de batterie de l'art antérieur ;
- [Fig.3] illustre schématiquement une vue dans l'espace des couvercles de la figure 2 assemblés, montrant un cordon de colle masqué par la pièce d'impacteur ;
- [Fig.4] illustre schématiquement une solution de l'art antérieur dans laquelle la pièce d'impacteur est découpée pour donner accès à un outil de découpe D1 du cordon de colle D3 ;
- [Fig.5] illustre schématiquement une vue dans l'espace d'une pièce de flanc selon l'invention ;
- [Fig.6] illustre schématiquement une vue dans l'espace d'une pièce d'impacteur selon l'invention ;
- [Fig.7] illustre schématiquement une vue dans l'espace de la pièce de flanc de la figure 5 assemblée de manière réversible à la pièce d'impacteur de la figure 6.

L'invention concerne une batterie de traction de véhicule automobile comprenant un couvercle de protection en deux parties configurées pour être collées ensemble. Dans la présente description, un cordon de colle C3 spécifique est pertinent, et spécifiquement décrit.

Dans la variante préférée, le couvercle en deux parties comprend un couvercle supérieur C1 et un couvercle inférieur C2, renfermant ensemble les éléments de la batterie de traction.

La batterie comprend latéralement une pièce d'impacteur PI et une pièce de flanc PF. Ces deux pièces sont assemblées ensemble de chaque côté pour former la batterie recevant la batterie. La pièce de flanc PF est configurée pour fixer la batterie à une caisse de véhicule. En effet, la batterie comporte classiquement des zones de fixation par vissage P1, P2 pour fixer la batterie à la caisse du véhicule. Ces zones de fixation P1, P2 sont sur la pièce de flanc PF. Ces zones de fixations P1, P2 peuvent comprendre un taraudage dans la partie correspondante, configuré pour coopérer avec une vis de fixation.

La pièce d'impacteur PI est configurée pour protéger la batterie de chocs latéraux, en particulier par l'intermédiaire d'un corps d'impacteur SI.

En outre, la pièce d'impacteur PI et la pièce de flanc PF coopèrent ensemble pour former un flanc de batterie de sorte que la pièce d'impacteur PI masque au moins partiellement ledit cordon de colle C3. Ce masquage peut être illustré par la figure 3 dans l'agencement de l'art antérieur.

Selon l'invention, la pièce d'impacteur PI et la pièce de flanc PF sont des pièces séparées, et sont fixées l'une à l'autre de manière réversible, de préférence par vissage. Ainsi, elles peuvent être facilement désassemblées l'une de l'autre, en particulier par dévissage, pour avoir accès au cordon de colle C3.

Au lieu de produire une seule pièce ayant la fonction de couvercle inférieur de batterie C2, PF et d'impacteur comme dans l'art antérieur, on produit deux pièces PI, PF assemblées de manière réversible, par exemple par vissage.

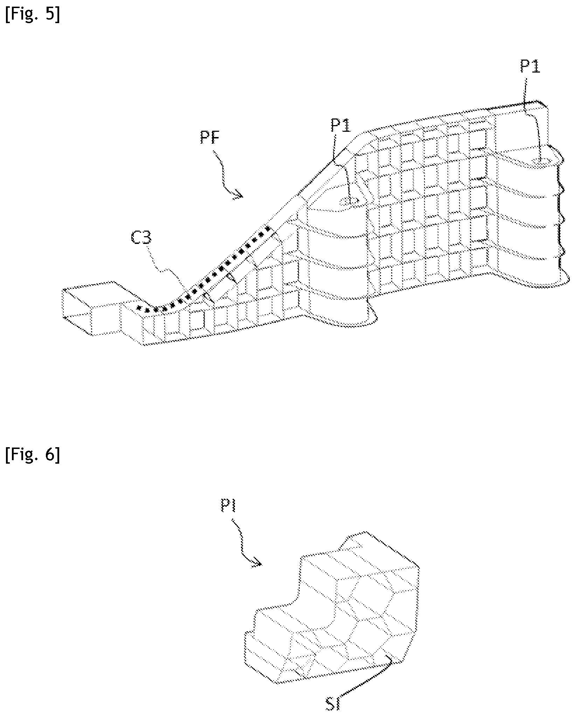

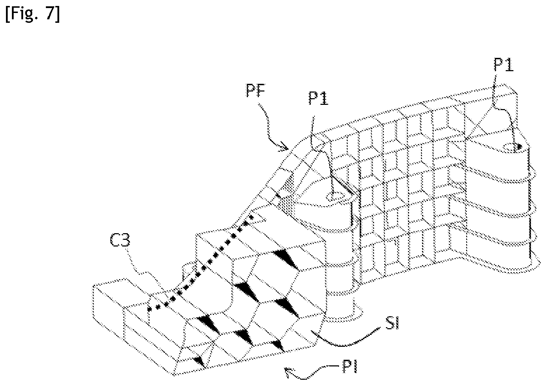

Comme on peut le voir dans les figures, la pièce de flanc PF du couvercle inférieur C2 de batterie (illustrée en figure 5), est isolable de la pièce d'impacteur PI (illustrée en figure 6). Ces deux pièces sont facilement désassemblées et réassemblées, comme l'illustre la figure 7.

Une fois lesdites pièces PI, PF assemblées ensemble (par exemple par vissage) la fonction de transmission des efforts vers les traverses internes T de la batterie est assurée.

Une fois la pièce d'impacteur PI démontée, l'accès à la portée de colle (cordon C3) est aisé, et permet un démontage de la batterie.

## Revendications

1. Batterie de traction de véhicule automobile comprenant un couvercle (C1, C2) en deux parties configurées pour être collées ensemble au moyen d'au moins un cordon de colle (C3), la batterie comprenant
- une pièce de flanc (PF) pour un flanc de batterie, configurée pour fixer la batterie à une caisse de véhicule, et
- une pièce d'impacteur (PI) configurée pour protéger la batterie de chocs latéraux, **caractérisée en ce que** la pièce d'impacteur (PI) est configurée pour être fixée à la pièce de flanc (PF) pour former un flanc de batterie de sorte que la pièce d'impacteur (PI) masque au moins partiellement ledit cordon de colle (C3),
et **en ce que** la pièce d'impacteur (PI) et la pièce de flanc (PF) sont des pièces séparées, et sont fixées l'une à l'autre de manière démontable.

2. Batterie selon la revendication 1, **caractérisée en ce que** la pièce d'impacteur (PI) et la pièce de flanc (PF) sont fixées ensemble par vissage.

3. Batterie selon l'une quelconque des revendications 1 à 2, **caractérisée en ce que** la pièce de flanc (PF) est configurée pour être fixée au véhicule automobile par vissage.

4. Procédé de démontage d'une batterie de traction de véhicule automobile selon l'une quelconque des revendications 1 à 3, ledit cordon de colle (C3) étant découplable, le procédé étant **caractérisé par** les étapes suivantes :
- une étape de désassemblage de la pièce d'impacteur (PI) de la pièce de flanc (PF) de sorte à démasquer ledit cordon de colle (C3), et
- une étape de découpage dudit cordon de colle (C3).

5. Procédé de démontage selon la revendication 4, **caractérisé en ce que** l'étape de désassemblage est mise en œuvre par dévissage.

6. Véhicule automobile comprenant une batterie de traction selon l'une quelconque des revendications 1 à 3.

## Patentansprüche

1. Traktionsbatterie für ein Kraftfahrzeug, umfassend einen Deckel (C1, C2) aus zwei Teilen, die so ausgebildet sind, dass sie mittels mindestens einer Kleberraupe (C3) miteinander verklebt werden, wobei die Batterie umfasst:
- ein Seitenteil (PF) für eine Batterieseite, das dazu ausgebildet ist, die Batterie an einer Fahrzeugkarosserie zu befestigen, und
- ein Aufprallteil (PI), das dazu ausgebildet ist, die Batterie vor seitlichen Stößen zu schützen,
**dadurch gekennzeichnet, dass** das Aufprallteil (PI) dazu ausgebildet ist, am Seitenteil (PF) befestigt zu werden, um eine Batterieseite zu bilden, sodass das Aufprallteil (PI) die Kleberraupe (C3) zumindest teilweise verdeckt, und dass das Aufprallteil (PI) und das Seitenteil (PF) getrennte Bauteile sind und lösbar miteinander befestigt sind.

2. Batterie nach Anspruch 1, **dadurch gekennzeichnet, dass** das Aufprallteil (PI) und das Seitenteil (PF) durch Verschraubung miteinander befestigt sind.

3. Batterie nach einem der Ansprüche 1 oder 2, **dadurch gekennzeichnet, dass** das Seitenteil (PF) dazu ausgebildet ist, durch Verschraubung am Kraftfahrzeug befestigt zu werden.

4. Verfahren zum Demontieren einer Traktionsbatterie für ein Kraftfahrzeug nach einem der Ansprüche 1 bis 3, wobei die Kleberraupe (C3) trennbar ist, wobei das Verfahren **gekennzeichnet ist durch** folgende Schritte:
- einen Schritt des Auseinanderbaus des Aufprallteils (PI) vom Seitenteil (PF), um die Kleberraupe (C3) freizulegen, und
- einen Schritt des Durchtrennens der Kleberraupe (C3).

5. Verfahren nach Anspruch 4, **dadurch gekennzeichnet, dass** der Schritt des Auseinanderbaus durch Abschrauben durchgeführt wird.

6. Kraftfahrzeug, umfassend eine Traktionsbatterie nach einem der Ansprüche 1 bis 3.

## Claims

1. Traction battery for a motor vehicle comprising a cover (C1, C2) made of two parts configured to be bonded together by means of at least one bead of adhesive (C3), the battery comprising:
- a side part (PF) for a battery side, configured to fasten the battery to a vehicle body, and
- an impactor part (PI) configured to protect the battery against lateral impacts,
**characterized in that** the impactor part (PI) is configured to be fastened to the side part (PF) so as to form a battery side such that the impactor part (PI) at least partially masks said bead of adhesive (C3), and **in that** the impactor part (PI) and the side part (PF) are separate parts and are fastened to one another in a detachable manner.

2. Battery according to claim 1, **characterized in that** the impactor part (PI) and the side part (PF) are fastened together by screwing.

3. Battery according to any one of claims 1 or 2, **characterized in that** the side part (PF) is configured to be fastened to the motor vehicle by screwing.

4. Method for disassembling a traction battery for a motor vehicle according to any one of claims 1 to 3, said bead of adhesive (C3) being separable, the method being **characterized by** the following steps:
- a step of disassembling the impactor part (PI) from the side part (PF) so as to unmask said bead of adhesive (C3), and
- a step of cutting said bead of adhesive (C3).

5. Method according to claim 4, **characterized in that** the disassembly step is carried out by unscrewing.

6. Motor vehicle comprising a traction battery according to any one of claims 1 to 3.
